# EUROPEAN PATENT SPECIFICATION

(11) **EP 1 593 712 B1**
(45) Date of publication and mention of the grant of the patent: **16.07.2014**
(21) Application number: 04706336.7
(22) Date of filing: 29.01.2004
(51) Int. Cl.: C08L 69/00, C08K 5/098

(54) **FLAME-RETARDANT POLYCARBONATE RESIN COMPOSITION**
FLAMMFESTE POLYCARBONATHARZZUSAMMENSETZUNG
COMPOSITION DE RESINE POLYCARBONATE IGNIFUGE

(30) Priority: 03.02.2003 JP 2003026473
(43) Date of publication of application: 09.11.2005
(73) Proprietor: DAIHACHI CHEMICAL INDUSTRY CO., LTD., Osaka-shi, Osaka 541-0046 (JP)
(72) Inventor: FUJISAWA, Taku, Handa-shi, Aichi 475-0833 (JP); TANAKA, Sakiko, Handa-shi, Aichi 475-0833 (JP)
(74) Representative: Robson, Aidan John
(86) International application number: PCT/JP2004/000873
(87) International publication number: WO 2004/069934

(56) References cited:
- DE-A1- 2 948 871
- JP-A- 6 263 978

## Description

### TECHNICAL FIELD

The present invention relates to a flame-retardant polycarbonate resin composition, to a flame retardant for a polycarbonate resin, and to a molded article of a polycarbonate resin. Particularly, the present invention relates to a flame-retardant polycarbonate resin composition using a metal salt of an aromatic carboxylic acid, to a flame retardant for polycarbonate resin, and to a molded article of a polycarbonate resin. More particularly, the present invention relates to a flame-retardant polycarbonate resin composition, to flame retardants for polycarbonate resins, and to a molded article of a polycarbonate resin which imparts satisfactory flame retardancy to a polycarbonate resin by adding an extremely small amount of a flame retardant and which causes substantially no deterioration in mechanical strength (for example, impact resistance, etc.) and in outside appearance performance (for example, no change in color to yellow or brown at the time of extrusion or molding process), to flame retardants for polycarbonate resins, and to a molded article of a polycarbonate resin.

### BACKGROUND ART

### (Prior Art)

Polycarbonate resins are widely used in various fields, for example, industrial fields such as the electric or electronic field, the office automation equipment field and the automobile field and medical, safety or leisure goods due to their superior mechanical characteristics and thermal stability. In recent years, particularly in the field typified by office automation equipment, the wall thickness of products has been reduced for their weight reduction and it is necessary for the products having a thin wall to be highly flame-retardant. Halogen- or phosphorus-containing flame retardants, which have high flame retarding effects, have been widely used for imparting flame retardancy to polycarbonate resins. However, there are problems with the use of halogen-containing flame retardants, such as generation of highly toxic halogenated organic substances such as dioxin during flaming. In general, a molded article of a polycarbonate resin is often employed for products which are required to have a high-quality feeling. Therefore, their getting colored, even if slightly, yellow or brown often becomes a serious drawback which greatly reduces the value of the products. On the other hand, when a phosphorus-containing flame retardant is used, the phosphorus-containing flame retardant must be added in a large amount. Therefore there is a problem that the heat resistance of the polycarbonate resin is greatly deteriorated and it is impossible to maintain characteristics which are inherent in the polycarbonate resin.

Therefore, other flame retardants have also been widely researched in order to impart flame retardancy to a polycarbonate resin.
Patent Document 1: Japanese Laid-open Publication No. 2001-115162 (pages 2 to 7)
Patent Document 2: Japanese Laid-open Publication No. 6-65490 (pages 2 to 6)
Patent Document 3: Japanese Laid-open Publication No. 6-263978 (pages 2 to 7)

For example, Japanese Laid-open Publication No. 2001-115162 discloses a resin composition in which perfluoroalkylsulfonic acid alkali (alkaline earth) metal salt is added to a polycarbonate resin. However, this resin composition has a drawback in that it is poor in fluidity. Therefore, the composition must be molded with a molding temperature and a mold temperature which are higher than usual (for example, a molding temperature is 305°C and a mold temperature is 100°C). The molding process at such high temperatures is problematic since a resin is exposed to a high temperature and, therefore, is likely to deteriorate or decompose, resulting in difficulties maintaining characteristics which are inherent in the polycarbonate resin.

Japanese Laid-open Publication No. 6-65490 discloses a resin composition comprising a polycarbonate resin, a metal salt, filler and carboxylic acid. For example, it discloses a resin composition comprising a polycarbonate resin, metal carboxylate, polytetrafluoroethylene and carboxylic anhydride. However, such a resin composition has a drawback in that a resin or an added compound is likely to decompose during a kneading or molding process and another drawback is that a kneaded resin composition is likely to get colored. Specifically, for example, there are drawbacks in that the decomposition of a resin or an added compound during kneading results in generation of gas and vigorous smoke and that a kneaded resin composition extruded from a kneading machine is likely to get colored yellow or brown.

Furthermore, molded articles obtained from the composition disclosed in Japanese Laid-open Publication No. 6-65490 have a drawback in that they are likely to get colored and it is difficult to achieve sufficient flame retardancy.

Japanese Laid-open Publication No. 6-263978 discloses a resin composition comprising a polycarbonate resin, a salt of a carboxylic acid with a metal of the third period to the sixth period of the periodic table excluding nickel and group 1A alkali metals of the periodic table, fibrous filler and polytetrafluoroethylene. However, such a resin composition has a drawback in that a resin or an added compound is likely to decompose during kneading or molding or that a kneaded resin composition is likely to get colored. Specifically, as stated above for the composition of Japanese Laid-open Publication No. 6-65490, there is a drawback that the decomposition of a resin or an added compound during kneading results in generation of gas and vigorous smoke or that a kneaded resin composition extruded from a kneading machine is likely to get colored yellow or brown.

Furthermore, molded articles obtained from the composition disclosed in Japanese Laid-open Publication No. 6-263978 have a problem in that they are likely to get colored and it is difficult to achieve sufficient flame retardancy.

Although resins (polymer alloys) obtained by blending polycarbonate resin and another thermoplastic resin (for example, an ABS resin, polystyrene resin and polyester resin) have been widely used for various molded articles and the like, there is a problem with the aforementioned blend of resins (polymer alloy) obtained by blending a polycarbonate resin and another thermoplastic resin (especially, an ABS resin, polystyrene resin or polyester resin) such that it is extremely difficult to impart flame retardancy to the blend of resins by adding a metal salt as a flame-retardant. DE 2 948 871 Al, JP-A-6263978 and US 6462111 discloses flame-retardant compositions.

### (Problems to Be Solved by the Invention)

The present invention solves the previous problems, namely environmental problems such as toxic gas generation, deterioration of physical properties which are inherent in a polycarbonate resin caused by molding at a high temperature and the deterioration of physical properties, which are inherent in a polycarbonate resin, caused by additives. The object of the present invention is to provide a flame-retardant resin composition which has satisfactory flame retardancy and maintains characteristics such as heat resistance and impact resistance which are inherent in the resin by using flame retardants which are free of chlorine, bromine and phosphorus atoms.

### DISCLOSURE OF THE INTENTION

### (Means for Solving the Problems)

The present inventors conducted a research earnestly to solve the above-mentioned problems and, as a result, have accomplished the present invention by finding out that a polycarbonate resin composition which contains substantially no chlorine, bromine or phosphorus atoms and has a satisfactory flame-retarding effect can be produced by adding an extremely small amount of a metal salt of an aromatic carboxylic acid.

The present invention provides a flame-retardant resin composition comprising (A) a polycarbonate resin, (B) an alkali metal salt or alkaline earth metal salt of an aromatic carboxylic acid having at least two carboxyl groups, wherein all the plurality of carboxyl groups are in the form of a metal salt; and (C) a fluorine-containing resin, wherein the composition is free of a chlorine-containing flame-retardant, and the composition is free of a bromine-containing flame-retardant.

In the present specification, the polycarbonate resin is also expressed simply as "component (A)". The alkali metal salt or alkaline earth metal salt of an aromatic carboxylic acid is also expressed simply as "component (B)". The fluorine-containing resin is also expressed simply as "component (C)".

In one embodiment, the salt (B) is an alkali metal salt of an aromatic carboxylic acid having at least two carboxyl groups.

In one embodiment, the salt (B) is an alkali metal salt of an aromatic carboxylic acid having from two to four carboxyl groups.

In one embodiment, the salt (B) is selected from the group consisting of dipotassium terephthalate, disodium terephthalate, disodium isophthalate, trisodium trimellitate, tetrapotassium pyromellitate and tetrasodium pyromellitate.

In one embodiment, the salt (B) is an alkaline earth metal salt of an aromatic carboxylic acid having at least two carboxyl groups.

In one embodiment, the salt (B) is an alkaline earth metal salt of an aromatic carboxylic acid having from two to four carboxyl groups.

In one embodiment, the salt (B) is selected from the group consisting of calcium terephthalate, magnesium isophthalate, calcium isophthalate, magnesium phthalate and calcium phthalate.

In one embodiment, the fluorine-containing resin (C) is polytetrafluoroethylene.

In one embodiment, a composition of the present invention contains (B) 0.001 to 1 part by weight of the alkali metal salt of an aromatic carboxylic acid and (C) 0.05 to 2 parts by weight of the fluorine-containing resin with respect to (A) 100 parts by weight of the polycarbonate resin.

In one embodiment, a composition of the present invention contains (B) 0.001 to 1 part by weight of the alkaline earth metal salt of an aromatic carboxylic acid and (C) 0.05 to 2 parts by weight of the fluorine-containing resin with respect to (A) 100 parts by weight of the polycarbonate resin.

In one embodiment, a composition of the present invention is free of chlorine-containing flame retardants, bromine-containing flame retardants, phosphorus-containing flame retardants, metal salts of aliphatic carboxylic acids and zinc salts of aromatic carboxylic acids.

In one embodiment, a composition of the present invention further contains (D) a thermoplastic resin other than the polycarbonate resin and the fluorine-containing resin.

In one embodiment, a composition of the present invention further contains (D') at least one thermoplastic resin selected from an ABS resin, polyester resin and polystyrene resin.

The present invention also provides a flame retardant for polycarbonate resin comprising (B) an alkali metal salt or alkaline earth metal salt of an aromatic carboxylic acid and (C) a fluorine-containing resin.

Furthermore, the present invention provides a molded article obtained by molding the aforementioned flame-retardant polycarbonate resin composition of the present invention.

### BEST MODE FOR CARRYING OUT THE INVENTION

### (Embodiments of Carrying Out the Invention)

### (Component A: polycarbonate resin)

In the present specification, a polycarbonate resin refers to a polymer molecule having a carbonate bond (-O-CO-O-) in the main chain. As the polycarbonate resin used in the present invention, various types of known polycarbonate resins may be used. Aliphatic polycarbonate resins, which are produced by using aliphatic glycol as a raw material, may be employed. However, from the viewpoint of physical properties, aromatic polycarbonate, which is produced by using dihydric phenol as a raw material, is preferred.

As a method for the production of polycarbonate resin, various known methods may be used. Specifically, for example, it can be obtained by a reaction of a polyhydric phenol compound with a carbonic acid diester compound such as phosgene and diphenyl carbonate.

As the dihydric phenol compound, any compounds having two phenolic hydroxyl groups may be employed. However, from the viewpoint of the balance of flame retardancy and other physical properties of a resulting resin composition, 2,2-bis(4-hydroxyphenyl)propane (common name: bisphenol A) is preferred.

Examples of dihydric phenol compounds other than bisphenol A include the following compounds:
dihydroxydiarylalkanes such as bis(4-hydroxyphenyl)methane, bis(4-hydroxyphenyl)phenylmethane, bis(4-hydroxyphenyl)naphthylmethane, bis(4-hydroxyphenyl)-(4-isopropylphenyl)methane, bis(3,5-dimethyl-4-hydroxyphenyl)methane, 1,1-bis(4-hydroxyphenyl)ethane, 1-naphthyl-1,1-bis(4-hydroxyphenyl)ethane, 1-phenyl-1,1-bis(4-hydroxyphenyl)ethane, 1,2-bis(4-hydroxyphenyl)ethane, 2-methyl-1,1-bis(4-hydroxyphenyl)propane, 2,2-bis(3,5-dimethyl-4-hydroxyphenyl)propane, 1-ethyl-1,1-bis(4-hydroxyphenyl)propane, 2,2-bis(3-methyl-4-hydroxyphenyl)propane, 1,1-bis(4-hydroxyphenyl)butane, 2,2-bis(4-hydroxyphenyl)butane, 1,4-bis(4-hydroxyphenyl)butane, 2,2-bis(4-hydroxyphenyl)pentane, 4-methyl-2,2-bis(4-hydroxyphenyl)pentane, 2,2-bis(4-hydroxyphenyl)hexane, 4,4-bis(4-hydroxyphenyl)heptane, 2,2-bis(4-hydroxyphenyl)nonane and 1,10-bis(4-hydroxyphenyl)decane;
dihydroxydiarylcycloalkanes such as 1,1-bis(4-hydroxyphenyl)-3,3,5-trimethylcyclohexane, 1,1-bis(4-hydroxyphenyl)cyclohexane and 1,1-bis(4-hydroxyphenyl)cyclodecane;
dihydroxydiarylsulfones such as bis(4-hydroxyphenyl)sulfone and bis(3,5-dimethyl-4-hydroxyphenyl)sulfone; dihydroxydiarylethers such as bis(4-hydroxyphenyl)ether and bis(3,5-dimethyl-4-hydroxyphenyl)ether;
dihydroxydiarylketones such as 4,4'-dihydroxybenzophenone, 3,3',5,5'-tetramethyl-4,4'-dihydroxybenzophenone;
dihydroxydiarylsulfides such as bis(4-hydroxyphenyl)sulfide, bis(3-methyl-4-hydroxyphenyl) sulfide and bis(3,5-dimethyl-4-hydroxyphenyl) sulfide;
dihydroxydiarylsulfoxides such as bis(4-hydroxyphenyl) sulfoxide;
dihydroxybiphenyls such as 4,4'-dihydroxybiphenyl; and dihydroxyarylfluorenes such as 9,9-bis(4-hydroxyphenyl)fluorene.

Instead of the aforementioned dihydric phenol compounds, dihydroxybenzenes such as hydroquinone, resorcin and methyl hydroquinone; and dihydroxynaphthalenes such as 1,5-dihydroxynaphthalene and 2,6-dihydroxynaphthalene may also be used.

The aforementioned dihydric phenol compounds and the compounds which can be used in stead of the dihydric phenol compounds may be used either alone or in combination of two or more thereof.

The carbonic acid diester compound which is reacted with the dihydric phenol compound includes diaryl carbonates such as diphenyl carbonate; and dialkyl carbonates such as dimethyl carbonate and diethyl carbonate.

### (Component B: an alkali metal salt or alkaline earth metal salt of an aromatic carboxylic acid)

As the salt of component (B), an alkali metal salt or alkaline earth metal salt of any known aromatic carboxylic acid may be used.

The carboxylic acid components of the metal salt of the aromatic carboxylic acid may be an aromatic carboxylic acid having only one carboxyl group (e.g., benzoic acid). However, an aromatic carboxylic acid having at least two carboxyl groups are preferred. The number of carboxyl groups may be two, three, four, or five or more. More preferably, the number of carboxyl groups is from two to four.

The metal component forming the salt portion of the metal salt is an alkali metal or alkaline earth metal. Specific examples of the alkali metal include Li, Na, K and Rb. Sodium and potassium are the most preferable. On the other hand, specific examples of the alkaline earth metal include Be, Mg, Ca, St and Ba. Magnesium and calcium are the most preferable.

Specific examples of the aromatic carboxylic acid having at least two carboxyl groups include a terephthalic acid, phthalic acid, phthalic anhydride, isophthalic acid, trimellitic acid, trimellitic anhydride, pyromellitic acid, pyromellitic anhydride, naphthalene dicarboxylic acid, and the like.

Examples of a preferable metal salt of a carboxylic acid include an alkali metal salt of terephthalic acid, alkaline earth metal salt of terephthalic acid, alkali metal salt of phthalic acid, alkaline earth metal salt of phthalic acid, alkali metal salt of isophthalic acid, alkaline earth metal salt of isophthalic acid, alkali metal salt of trimellitic acid, and alkali metal salt of pyromellitic acid. More specific examples are alkali metal salt of carboxylic acid such as dipotassium terephthalate, disodium terephthalate, disodium isophthalate, trisodium trimellitate, tetrapotassium pyromellitate and tetrasodium pyromellitate and alkaline earth metal salt of carboxylic acid such as calcium terephthalate, magnesium isophthalate, calcium isophthalate, magnesium phthalate and calcium phthalate.

In the aforementioned metal salt of the aromatic carboxylic acid having at least two carboxyl groups, all the plurality of carboxyl groups are preferably in the form of a metal salt. However, if necessary, it may be a compound in which only some of the plurality of carboxyl groups are in the form of a metal salt and the other carboxyl groups remain unchanged. Examples of such compounds include a monometal salt of a dicarboxylic acid, monometal salt and dimetal salt of a tricarboxylic acid, and monometal salt, dimetal salt and trimetal salt of a tetracarboxylic acid.

Since many of the above-mentioned metal salts are known compounds, compounds which are available in the market as metal salts maybe used. When being unavailable from reagent suppliers, metal salts may be synthesized by utilizing a known neutralization reaction. As the synthesizing reaction, various known reactions may be used. For example, a method of allowing an acid corresponding to the metal salt to react with a base corresponding to the metal salt in an aqueous solution may be used.

From the viewpoint of flame retardancy, the amount of the metal salt, component (B), to be added is preferably 0.0001 parts by weight or more, more preferably 0.001 parts by weight or more, even more preferably 0.002 parts by weight or more, and particularly preferably 0.01 parts by weight or more with respect to 100 parts by weight of the polycarbonate resin.

From the viewpoint of prevention of deterioration of physical properties of a polycarbonate resin, the amount of the metal salt, component (B), to be added is preferably 5 parts by weight or less, more preferably 1 part by weight or less, even more preferably 0.5 parts by weight or less, and particularly preferably 0.2 parts by weight or less, still even more preferably 0.1 parts by weight or less, and most preferably 0.05 parts by weight or less with respect to 100 parts by weight of the polycarbonate resin.

When the amount of addition is too small, it is difficult to achieve a sufficient flame retarding effect. On the other hand, when the amount is too large, then decomposition of the polycarbonate resin is likely to be accelerated. Therefore, adding too much of an amount may cause adverse effects, e.g., deterioration in physical properties, such as impact resistance, which are inherent in the polycarbonate resin, and is not preferable.

### (Component C: fluorine-containing resin)

According to the present invention, it is possible to obtain a high level of flame retardancy by combining a metal salt of an aromatic carboxylic acid and a fluorine-containing resin. In particular, the performance that a molten resin does not drip during a flaming test, namely the performance of preventing a molten resin from dripping is regarded as important in the field of various flame-retardant materials. For the performance of preventing a molten resin from dripping, the combination of a metal salt of an aromatic carboxylic acid and a fluorine-containing resin is quite favorable.

In the present specification, a fluorine-containing resin refers to a polymer containing fluorine in the molecule and, in general, has a structure where some or all of hydrogen atoms in polyethylene have been replaced with fluorine atoms or trifluoromethyl. The number of fluorine atoms in the molecule is preferably 0.5 times the number of hydrogen atoms in the molecule or more, more preferably 1 time (equal to) the number of hydrogen atoms in the molecule or more, even more preferably 2 times the number of hydrogen atoms in the molecule or more, and particularly preferably 5 times the number of hydrogen atoms in the molecule or more.

Specific examples of the fluorine-containing resin used in the present invention include polytetrafluoroethylene, tetrafluoroethylene-hexafluoropropylene copolymer, tetrafluoroethylene-perfluoroalkylvinylether copolymer, tetrafluoroethylene-ethylene copolymer and polyfluorovinylidene. Preferable fluorine-containing resins are polytetrafluoroethylene, tetrafluoroethylene-ethylene copolymer and polyfluorovinylidene, and further preferred is polytetrafluoroethylene. The fluorine-containing resin may be in any known form. For example, fluorine-containing resins in an emulsion form, suspension form, microfibril form, powder form, granule form or the like can be used.

The fluorine-containing resin may be a polymer containing a halogen atom other than fluorine (e. g. , a polymer containing fluorine and chlorine). However, use of a fluorine-containing resin containing no halogen atoms other than fluorine is preferable in view of flame retardancy and various physical properties.

From the viewpoint of flame retardancy, particularly prevention of a molten resin from dripping during flaming, the amount of the fluorine-containing resin to be added is preferably 0.0001 parts by weight or more, more preferably 0.001 parts by weight or more, even more preferably 0.002 parts by weight or more, and particularly preferably 0.01 parts by weight or more with respect to 100 parts by weight of the polycarbonate resin. An amount of 0.05 parts by weight or more is most preferable. From the viewpoint of preventing deterioration of physical properties of a polycarbonate resin, the amount of fluorine-containing resin is preferably 5 parts by weight or less, more preferably 2 parts by weight or less, even more preferably 1 part by weight or less, particularly preferably 0.50 parts by weight or less, and still even more preferably 0.40 parts by weight or less with respect to 100 parts by weight of the polycarbonate resin.

If the amount of the fluorine-containing resin to be added is too small, it is difficult to achieve a sufficient effect of preventing a resin from dripping. If the amount to be added is too much, adverse effects, e. g. , deterioration in physical properties, such as impact resistance, which are inherent in a polycarbonate resin, may be caused. Therefore, it is not preferable that the amount is too much.

### (Other resins)

To the flame-retardant polycarbonate resin composition of the present invention, a resin other than component (A) (polycarbonate resin) and component (C) (fluorine-containing resin) (hereinafter, referred also to as "component (D)") may be optionally added, to the extent that the physical properties of the composition are not substantially impaired. As component (D), any resin, which can form a so-called polymer alloy when being blended with a polycarbonate resin, can be preferably used. For example, thermoplastic resin such as polyethylene terephthalate, polybutylene terephthalate, polyethylene, polypropylene, ABS, polystyrene and (meth)acrylic esters may be added if necessary. It is noted that in the present specification, the polymer alloy refers to a uniform mixture obtained by blending a plurality of different resins.

A preferable resin as component (D) is an ABS resin, polystyrene resin or polyester resin. An ABS resin is more preferred. In the present specification, a thermoplastic resin selected from an ABS resin, polystyrene resin or polyester resin is also referred to as "component (D')".

Various kinds of molded articles made by blending a polycarbonate resin and another thermoplastic resin (e.g., an ABS resin) have been widely used. However, when a metal salt was used as a flame retardant, there was a drawback that addition of a small amount of another thermoplastic resin to a polycarbonate resin results in a significant deterioration in flame retardancy. Although detailed theoretical mechanisms are unknown, silicone-based compounds, which have been known as flame retardants capable of imparting a flame retarding effect to some extent to pure polycarbonate, a metal salt of a carboxylic acid except those used in the present application, other organometal salts, and the like, can impart almost no flame retarding effects to a blend of resins (polymer alloys) in which a small amount of another thermoplastic resin (e.g., an ABS resin, polystyrene resin or polyester resin) is added to a polycarbonate resin.

However, in the composition of the present invention, a remarkable flame retarding effect can surprisingly be imparted even in the case where a small amount of another resin (for example, an ABS resin, polystyrene resin and polyester resin) is added to a polycarbonate resin. Therefore, the flame retardant of the present invention is industrially extremely useful in a resin (polymer alloy) in which a polycarbonate resin and another resin(s) (for example, an ABS resin, polystyrene resin and polyester resin) have been blended.

However, it is desirable to use component (D) in a small amount in order to avoid substantial deterioration of performance of a polycarbonate resin. The amount of component (D) to be used is preferably 50 parts by weight or less, more preferably 30 parts by weight or less, even more preferably 10 parts by weight or less, and particularly preferably 5 parts by weight or less with respect to 100 parts by weight of the polycarbonate resin.

There is no particular lower limit of the amount of component (D) to be added, but it is preferable to add the component in an amount of 0.1 parts by weight or more, more preferably 0.5 parts by weight or more with respect to 100 parts by weight of the polycarbonate resin in order to achieve an effect caused by the addition thereof.

As the aforementioned ABS resin, any known ABS resins may be employed. An ABS resin is a resin made of three components of acrylonitrile-butadiene-styrene. An ABS resin is classified into two types, namely the blend-type ABS including a polymer blend of a styrene-acrylonitrile copolymer and NBR, and the graft-type ABS obtained by graft-copolymerizing styrene and acrylonitrile in the presence of BR or SBR latex. Both types of ABS can be used for the present invention. The graft-type ABS is widely used in the market and can be used satisfactorily for the present invention.

The content of the acrylonitrile component in the ABS resin is not particularly limited. However, it is preferably 5% by weight or more, more preferably 10% by weight or more, and even more preferably 20% by weight or more of the ABS resin in order for the ABS resin to fully exert properties as an ABS resin.

The content of the butadiene component in the ABS resin is not particularly limited. However, it is preferably 5% by weight or more, more preferably 10% by weight or more, and even more preferably 20% by weight or more of the ABS resin in order for the ABS resin to fully exert properties as an ABS resin.

The content of the styrene component in the ABS resin is not particularly limited. However, it is preferably 5% by weight or more, more preferably 10% by weight or more, and even more preferably 20% by weight or more of the ABS resin in order for the ABS resin to fully exert properties as an ABS resin.

Any known polystyrene resins may be used as the aforementioned polystyrene resin. The polystyrene resin is a resin which is obtained by polymerizing substantially only styrene. Resins which are obtained by polymerizing only styrene are preferred. However, if necessary, other monomers may be copolymerized in an amount such that the performance of polystyrene is not impaired. As far as meeting this definition, the polystyrene may be either general purpose polystyrene (GPPS) or high impact polystyrene (HIPS). The amount of the other monomers which is copolymerized with the polystyrene resin is preferably up to 5% by weight of the resin.

Any known polyester resins may be used as the aforementioned polyester resin. The polyester resin refers to a resin obtained by polymerizing a polyol and a polycarboxylic acid. Both aliphatic polyester resin and aromatic polyester resin are known and both of them can be used for the present invention. A preferable resin is an aromatic polyester resin. A more preferable resin is a polyethylene terephthalate (PET) resin.

It is noted that, as component (D), a resin which produces phase separation when being blended with a polycarbonate resin, may also be employed. However, if there is a large amount of a resin in phase separation, it is difficult to achieve sufficient performance as a molded article of the resin. Therefore, the amount of the resin used is preferably so small that the performance of a molded article is not adversely affected.

### (Other flame retardants)

To the flame-retardant polycarbonate resin composition of the present invention, flame retardants other than the above-mentioned component (B) (alkali metal salt or alkaline earth metal salt of aromatic carboxylic acid) and component (C) (fluorine-containing resin) may be optionally added in a small amount, to the extent that the physical properties of the composition are not substantially impaired. However, it is preferable not to add a flame retardant other than components (B) and (C) from the viewpoint of preventing deterioration of performance of polycarbonate.

Examples of the kinds of the flame retardants which can be employed as the flame retardant other than components (B) and (C) include halogen-containing flame retardants (e.g., bromine-containing flame retardants and chlorine-containing flame retardants) and phosphorus-containing flame retardants (e.g., phosphate ester-type flame retardants). It is noted that, needless to say, in the present specification, thefluorine-containing resin is not included in the "flame retardant other than components (B) and (C)".

In order to cause substantially no impairment of the performance of a polycarbonate resin, the amount of a flame retardant other than components (B) and (C) is preferably 10 parts by weight or less, more preferably 5 parts by weight or less, even more preferably 3 parts by weight or less, and particularly preferably 1 part by weight or less with respect to 100 parts by weight of the polycarbonate resin. There is no particular lower limit of the amount of the flame retardant other than components (B) and (C). However, the amount is preferably 0.01 parts by weight or more, more preferably 0.1 parts by weight or more with respect to 100 parts by weight of the polycarbonate resin in order to achieve an effect caused by the addition thereof.

In the present invention, it is preferable not to use a metal salt of an aliphatic carboxylic acid as a flame retardant. This is because use of a metal salt of an aliphatic carboxylic acid may facilitate degradation of a polycarbonate resin when the polycarbonate resin is kneaded or molded. Furthermore, the use of the metal salt is likely to cause problems. For example, the resulting resin composition tends to contain bubbles. Thus, in the composition of the present invention, it is preferable to reduce the amount of a metal salt of aliphatic carboxylic acid as much as possible. Specifically, it is preferable to reduce the amount to 0.0005 parts by weight or less, more preferably to 0.0002 parts by weight or less with respect to 100 parts by weight of the polycarbonate resin.

In the present invention, it is preferable not to use a zinc salt of an aromatic carboxylic acid as a flame retardant. This is because use of a zinc salt of an aromatic carboxylic acid may facilitate degradation of a polycarbonate resin when the polycarbonate resin is kneaded or molded. Furthermore, the use of the zinc salt is likely to cause problems. For example, the resulting resin composition tends to contain bubbles. Thus, in the composition of the present invention, it is preferable to reduce the amount of a zinc salt of an aromatic carboxylic acid as much as possible. Specifically, it is preferable to reduce the amount to 0.0005 parts by weight or less, more preferably to 0.0001 parts by weight or less with respect to 100 parts by weight of the polycarbonate resin.

In the present invention, it is preferable not to use a chlorine-containing flame retardant. When a chlorine-containing flame retardant is used, harmful substances such as dioxin are likely to generate during incineration of molded articles. Thus, in the composition of the present invention, it is preferable that the amount of a chlorine-containing flame retardant is as small as possible. Specifically, the amount is preferably 5 parts by weight or less, more preferably to 1 part by weight or less, even more preferably to 0.3 parts by weight or less, and particularly preferably to 0.1 parts by weight or less with respect to 100 parts by weight of the polycarbonate resin.

In the present invention, it is preferable not to use a bromine-containing flame retardant. When a bromine-containing flame retardant is used, harmful substances are likely to generate during incineration of molded articles. Thus, in the composition of the present invention, it is preferable that the amount of a bromine-containing flame retardant is as small as possible. Specifically, the amount is preferably 5 parts by weight or less, more preferably to 1 part by weight or less, even more preferably to 0.3 parts by weight or less, and particularly preferably to 0.1 parts by weight or less with respect to 100 parts by weight of the polycarbonate resin.

In the present invention, it is preferable not to use a phosphorus-containing flame retardant. When a phosphorus-containing flame retardant is used, molded articles are likely to get colored and also to suffer deterioration in heat resistance. Thus, in the composition of the present invention, it is preferable that the amount of a phosphorus-containing flame retardant is as small as possible. Specifically, it is preferable to reduce the amount to 5 parts by weight or less, more preferably to 1 part by weight or less, even more preferably to 0.3 parts by weight or less, and particularly preferably to 0. 1 parts by weight or less with respect to 100 parts by weight of the polycarbonate resin.

### (Other Additives)

If necessary, various additives which are generally added to polycarbonate resin compositions may be added as an additive other than flame retardants to the flame-retardant polycarbonate resin composition of the present invention, to the extent that the physical properties of the compositions are not substantially impaired. These additives may be used either alone or in combination of two or more of them. Examples of such additives include a flame retarding auxiliary agent, filler, antioxidant (stabilizer), antistatic agent, lubricant (softener), pigment, UV absorber (light stabilizer) and reinforcing material.

Examples of the flame retarding auxiliary agent include graphite, activated carbon, salts of a boric acid, low-melting point glass, and carbon powders such as carbon black produced by the oil furnace method, the gas furnace method, the channel method or the acetylene method. The amount of the flame retarding auxiliary agent is not particularly limited, but is preferably 20 parts by weight or less, more preferably 5 parts by weight or less with respect to 100 parts by weight of the polycarbonate resin. If the amount is too much, physical properties of the polycarbonate resin are likely to deteriorate. The amount of the flame retarding auxiliary agent used has no particular lower limit. However, it is preferably 0.001 parts by weight or more, more preferably 0.1 parts by weight or more with respect to 100 parts by weight of the polycarbonate resin. If the amount is too small, it is difficult to achieve an effect of adding the flame retarding auxiliary agent.

Examples of the filler include a powdery, granular or platelike inorganic filler such as glass fiber, carbon fiber, metal fiber, ceramic fiber, mica, silica, talc, calcium carbonate, alumina, glass bead, glass balloon and glass flake, and organic filler such as wood flour. These may be used alone or in combination of two or more. The amount of the filler used is not particularly limited. However, the amount is preferably 100 parts by weight or less, more preferably 40 parts by weight or less, and even more preferably 20 parts by weight or less with respect to 100 parts by weight of the polycarbonate resin. If the amount is too large, physical properties of the polycarbonate resin are likely to deteriorate. The amount of the filler used has no particular lower limit. However, it is preferably 0.1 parts by weight or more, more preferably 1 part by weight or more with respect to 100 parts by weight of the polycarbonate resin. If the amount is too small, it is difficult to achieve an effect of adding the filler.

Examples of the reinforcing material include glass fibers, metal fibers and whiskers. The amount of the reinforcing material used is not particularly limited. However, it is preferably 100 parts by weight or less, more preferably 40 parts by weight or less, and even more preferably 20 parts by weight or less with respect to 100 parts by weight of the polycarbonate resin. If the amount is too large, physical properties of the polycarbonate resin are likely to deteriorate. The amount of the reinforcement used has no particular lower limit. However, it is preferably 0.1 parts by weight or more, more preferably 1 part by weight or more with respect to 100 parts by weight of the polycarbonate resin. If the amount is too small, it is difficult to achieve an effect of the addition of the reinforcing material.

Examples of the other additives include: an antioxidant (stabilizer) such as a phenol-type antioxidant, e.g., a hindered phenol derivative, amine-type antioxidant and sulfur-type antioxidant; an antistatic agents such as a cationic surfactant and nonionic surfactant; a lubricant (softener) such as a fatty acid derivative and high-boiling point wax; a pigment such as titanic oxide and a phthalocyanine pigment; and a UV absorber (light stabilizer) such as a benzophenone-type UV absorber, salicylate-type UV absorber, benzotriazole-type UV absorber and acrylonitrile-type UV absorber. The amount of these additives used is not particularly limited. However, it is preferably 10 parts by weight or less, more preferably 5 parts by weight or less with respect to 100 parts by weight of the polycarbonate resin. If the amount is too large, physical properties of the polycarbonate resin are likely to deteriorate. The amount of the additives used has no particular lower limit. However, it is preferably 0.001 parts by weight or more, more preferably 0.1 parts by weight or more with respect to 100 parts by weight of the polycarbonate resin. If the amount is too small, it is difficult to achieve an effect of the addition of each additive.

By mixing the ingredients described above, the polycarbonate resin composition of the present invention is obtained. In the production of a flame retardant composition of the present invention, there are no particular limitations with respect to an order of mixing the components and a method of mixing the components. Any known method may be used if the components can be mixed uniformly. Preferably, the materials are mixed and then kneaded in a condition where the polycarbonate resin is molten by heating. Thereby, a uniformly mixed composition can be produced easily. As the apparatus used for heating, melting and kneading, general-purpose apparatus may be used. Examples thereof include a single screw extruder, twin screw extruder such as a vent type extruder, a Henschel-type mixer, a Banbury mixer, a kneader mixer and a roll. These apparatus may be used alone or a plurality of apparatus may be used in combination.

### (Flame retardant of the invention)

The flame retardant of the present invention is a flame retardant for a polycarbonate resin containing (B) an alkali metal salt or alkaline earth metal salt of an aromatic carboxylic acid and (C) a fluorine-containing resin. The explanations of the components (B) and (C) in the explanation of the composition of the present invention provided above, also serve as the explanation of the flame retardant of the present invention.

The alkali metal salt or alkaline earth metal salt of an aromatic carboxylic acid which is used in the flame retardant of the present invention is the same as those explained above regarding component (B) of the composition of the present invention. The fluorine-containing resin which is used in the flame retardant of the present invention is the same as those explained above regarding component (C) of the composition of the present invention. To the flame retardant of the present invention, various types of additives, which have been explained regarding the composition of the present invention, may be blended.

The flame retardant of the present invention is produced by mixing component (B) and component (C) appropriately. Various additives are further added if necessary. Before being mixed with a polycarbonate resin, the flame retardant of the present invention may be packaged in a single container in a state where the salt of component (B) and the fluorine-containing resin of component (C) have been mixed uniformly. Alternatively, the salt of component (B) and the fluorine-containing resin of component (C) may be packaged in separate containers. When the salt of component (B) and the fluorine-containing resin of component (C) are contained in separate containers, they may be mixed with a polycarbonate resin directly. However, it is preferable to mix the salt of component (B) and the fluorine-containing resin of component (C) together before mixing with a polycarbonate resin.

The flame retardant of the present invention may be added during the melt-kneading of a polycarbonate resin. It is also permissible for the flame retardant to be added to a polycarbonate resin in a molding machine when the polycarbonate resin is molded. In order to improve the dispersibilities of the salt of component (B) and the fluorine-containing resin of component (C), it is also permissible to prepare a master batch in advance and then mix the master batch with virgin polycarbonate resin.

### (Molding method)

The polycarbonate resin composition of the present invention can be molded by a known method to produce an arbitrary molded article. As the molding method, any method known as a method for molding a polycarbonate resin may be used. Typically, a polycarbonate resin composition is melted by heat so as to flow, thereby it is molded into a desired shape. Examples of specific molding methods include injection molding, extrusion molding, press molding, blow molding, vacuum molding and the like.

In these molding methods, it is possible to obtain molded articles with desired shapes by using a desired mold. For example, it is possible to obtain various parts having complex shapes by injection molding. Alternatively, it is possible to obtain molded articles having relatively simple shapes such as films, pipes and rods by extrusion molding.

### (Molding Conditions)

Regarding the molding conditions to be used in the molding process, the molding method using the composition of the present invention may be conducted under arbitrary conditions like those which are used when a normal polycarbonate resin is molded, depending on the desired shape and the type and capacity of the molding apparatus to be used. In the case of a molding method using the mechanism where a resin is heated to melt, thereby being made flow, the resin composition is molten and made to flow typically at about 250°C to 300°C (more preferably at about 250°C to 290°C). For example, in injection molding, it is possible to obtain injection molded articles typically by melting a resin at a cylinder temperature of about 250°C to 300°C (more preferably about 250°C to 290°C) and injecting the resin into a mold at a mold temperature of about 30°C to 90°C.

### (Applications of molded articles)

Molded articles obtained as described above may be used for various known applications of polycarbonate resin molded articles. Specific examples include parts of various types of household electric appliances, parts of railway vehicles, parts of automobiles, parts of airplanes, items for disaster prevention, medical devices, food containers and kitchen utensils. Among typical applications of a polycarbonate resin, a molded article of the present invention is particularly useful for applications which require flame retardancy. In addition, they are also useful for applications which require high performance in terms of physical properties such as impact resistance.

### (Examples)

Examples and Comparative Examples are shown below in order to explain the present invention in more detail. However, these examples do not limit the scope of the present invention.

The flame retardants obtained in the Synthesis Examples and the components of the compositions used in the Examples and Comparative Examples are listed below.

### (1) Resin components:

PC: polycarbonate resin (Panlite L-1250WP, manufactured by Teijin Chemicals Ltd.)
ABS: acrylonitrile-butadiene-styrene copolymer (Cevian V-300 manufactured by Daicel Chemical Industries, Ltd.)
PET: polyethylene terephthalate resin (Kurapet KS750RC manufactured by Kuraray Co., Ltd.)
PS: polystyrene resin (Polystyrene HF-77 manufactured by A & W)

### (2) Flame retardant components:

Flame retardant 1: dipotassium terephthalate (Synthesis Example 1)
Flame retardant 2: disodiumterephthalate(manufacturedby Tokyo Kasei Kogyo Co., Ltd.)
Flame retardant 3: calcium terephthalate (Synthesis Example 2)
Flame retardant 4: disodium isophthalate (Synthesis Example 3)
Flame retardant 5: magnesium isophthalate (Synthesis Example 4)
Flame retardant 6: calcium isophthalate (Synthesis Example 5)
Flame retardant 7: magnesium phthalate (Synthesis Example 6)
Flame retardant 8: calciumphthalate(SynthesisExample 7)
Flame retardant 9: trisodium trimellitate (Synthesis Example 8)
Flame retardant 10: tetrasodium pyromellitate (Synthesis Example 9)
Flame retardant 11: tetrapotassium pyromellitate (Synthesis Example 10)
Flame retardant 12: potassium stearate (Synthesis Example 11)
Flame retardant 13: zinc acetate (manufactured by Wako Pure Chemical Industries, Ltd.)
Flame retardant 14: zinc benzoate (manufactured by Wako Pure Chemical Industries, Ltd.)

### (3) Dripping preventing component:

PTFE: polytetrafluoroethylene (PTFE6-J, PTFE6C-J manufactured by DuPont Mitsui Fluorochemical Co. Ltd.)

The Synthesis Examples of the flame retardant components are described below. However, the synthesis methods are not limited thereto.

### Synthesis Example 1 (Synthesis of flame retardant 1: dipotassium terephthalate):

Into a 1-liter four-necked flask equipped with a stirrer, a reflux condenser and a thermometer, 166.0 g (1.0 mol) of terephthalic acid and 130 g of water were charged. While stirring this mixed solution at 25°C, 404 g (115.4 g (2.06 mol) of KOH, 3 mol% excess) of a potassium hydroxide aqueous solution was added at 25°C to 42°C over 3 hours. Subsequently, the reaction material was heated to a temperature of 60°C over 2 hours and was stirred at that temperature (60°C) for 4 hours at normal pressure. The material was thereafter cooled to 10°C or lower and was subjected to separation by filtration. Thus, a white solid was collected. Subsequently, the collected solid was washed with cold water, thereby excess potassium hydroxide was removed. Thereafter, the solid was dried at 130°C under reduced pressure for 9 hours, yielding 142.3 g of white solid.

### Synthesis Example 2 (Synthesis of flame retardant 3: calcium terephthalate):

Into a 1-liter four-necked flask equipped with a stirrer, a reflux condenser and a thermometer, 41.5 g (0.25 mol) of terephthalic acid and 65 g of water were charged. While stirring this mixed solution at 25°C to 45°C, 90 g (20.8 g (0.52 mol) of NaOH, 4 mol% excess) of a sodium hydroxide aqueous solution was added over 1 hour. Stirring was conducted at 45°C for 3 hours. Subsequently, it was confirmed that the solid had been dissolved to form a homogeneous solution. 88 g (30.0 g (0.27 mol) of CaCl₂, 8 mol% excess) of a calcium chloride aqueous solution was added at 25°C over 40 minutes. Thereafter, stirring was conducted at that temperature (25°C) for 3 hours at normal pressure. A white solid, which was precipitated, was collected by filtration. Thereafter, excess sodium hydroxide, calcium chloride and sodium chloride, which is a by-product, were removed by washing with water. The solid was dried at 130°C under reduced pressure for 10 hours, yielding 52.9 g of white solid.

### Synthesis Example 3 (Flame retardant 4: disodium isophthalate):

214.4 g of white solid was obtained in the same manner as that in Synthesis Example 1 with the proviso that an isophthalic acid was used instead of the terephthalic acid and sodium hydroxide was used instead of the potassium hydroxide.

### Synthesis Example 4 (Synthesis of flame retardant 5: magnesium isophthalate):

24.5 g of white solid was obtained in the same manner as that in Synthesis Example 2 with the proviso that an isophthalic acid was used instead of the terephthalic acid and magnesium chloride was used instead of the potassium chloride.

### Synthesis Example 5 (Synthesis of flame retardant 6: calcium isophthalate):

37.9 g of white solid was obtained in the same manner as that in Synthesis Example 2 with the proviso that an isophthalic acid was used instead of terephthalic acid.

### Synthesis Example 6 (Synthesis of flame retardant 7: magnesium phthalate):

33.4 g of white solid was obtained in the same manner as that in Synthesis Example 2 with the proviso that a phthalic acid was used instead of the terephthalic acid and magnesium chloride was used instead of the calcium chloride.

### Synthesis Example 7 (Synthesis of flame retardant 8: calcium phthalate):

51.4 g of white solid was obtained in the same manner as that in Synthesis Example 2 with the proviso that a phthalic acid was used instead of the terephthalic acid.

### Synthesis Example 8 (Synthesis of flame retardant 9: trisodium trimellitate):

Into a 1-liter four-necked flask equipped with a stirrer, a reflux condenser and a thermometer, 25.2 g (0.12 mol) of trimellitic acid and 136 g of methanol were charged. While stirring this solution at 25°C to 40°C, 94 g (15.0 g (0.38 mol) of NaOH, 4 mol% excess) of a sodium hydroxide/methanol solution was added over 2 hours. Thereafter, stirring was conducted at 45°C under normal pressure for 3 hours. A white solid, which was precipitated, was collected by filtration. The collected solid was washed with methanol and then was dried at 130°C under reduced pressure for 8 hours, yielding 35.7 g of white solid.

### Synthesis Example 9 (Synthesis of flame retardant 10: tetrasodium pyromellitate):

Into a 1-liter four-necked flask equipped with a stirrer, a reflux condenser and a thermometer, 25.4 g (0.10 mol) of a pyromellitic acid and 100 g of water were charged. While stirring this mixed solution at 25°C, 58 g (16.4 g (0.41 mol) of NaOH, 3 mol% excess) of a sodium hydroxide aqueous solution was added at 25°C to 40°C over 3 hours. Then, the reaction material was heated to a temperature of 60°C over 2 hours and was stirred at that temperature (60°C) for 4 hours at normal pressure. After cooling, a solid was collected by filtration and washed with water. It was dried at 130°C under reduced pressure for 9 hours, yielding 33.8 g of white solid.

### Synthesis Example 10 (Synthesis of flame retardant 11: tetrapotassium pyromellitate):

37.7 g of white solid was obtained in the same manner as that in Synthesis Example 7 with the proviso that potassium hydroxide was used instead of the sodium hydroxide.

### Synthesis Example 11 (Synthesis of flame retardant 12: potassium stearate):

278.6 g of white solid was obtained in the same manner as that in Synthesis Example 1 with the proviso that a stearic acid was used instead of the terephthalic acid and the potassium hydroxide was used in a molar amount equal to that of the stearic acid.

Physical properties of the resin compositions obtained in the following Examples and Comparative Examples were determined by the testing methods described below.
(1) Test of vertical flammability (UL):
   Testing method: in accordance with UL-94 (average flame-out time of five specimens)
   Specimen: thickness 1/8 inch and 1/16 inch
   Evaluation: Ranking V-0, V-1 and V-2 under the regulation
(2) Oxygen index:
   Testing method: in accordance with JIS K-7201
   Specimen: width 10 mm, thickness 4 mm
(3) Izod impact strength:
   Testing method: in accordance with JIS K-7110
   Specimen: thickness 1/8 inch, with a notch
   Unit: kgf·cm/cm
(4) Coloration of extrusion molded articles:
   Visual evaluation
(5) Strength of resin compositions after kneading:
   Evaluation based on a feel when a strand obtained by a kneading machine was bent by hand.

A sample having a feel comparable to that of strands of a polycarbonate resin composition free from an additive is rated as being "good". A sample having a feel which is a little more fragile than the above one, is rated as being "a little fragile". A sample having a feel which is more fragile and easily breaking is rated as being "fragile".

### (Examples 1 to 13 and Comparative Examples 1 to 12)

With respect to 100 parts by weight of a polycarbonate resin, various additives were mixed in the mixing ratios (parts by weight) shown in Table 1. The mixtures were melt-kneaded at 280°C and extruded using a vent type twin screw extruder (TEM-37BS manufactured by Toshiba Machine Co., Ltd.). The conditions just after the extrusion are shown in Table 1.

In Examples 1 to 13 and Comparative Examples 2 and 3, the conditions after the extrusion were good. There was neither smoke nor coloration, and resin compositions having strength similar to that of Comparative Example 1 (a polycarbonate resin composition free from a flame retardant) were obtained. Comparative Examples 6 to 8 and 10 to 12 had a drawback in that the resin compositions got colored yellowish or brown. Comparative Examples 6, 8, 10 and 12 had a drawback in that a smoke occurred during extrusion. Furthermore, in Comparative Examples 5 and 9, when the resulting resin compositions were touched with hands, they had a feel which is a little fragile and in Comparative Examples 4, 7, 8, 11 and 12 the compositions had a feel which is fragile. Thus, these compositions were poor in strength in comparison to Comparative Example 1 (a polycarbonate resin composition free from a flame retardant).

The extruded resin compositions were processed into a form of pellets by a pelletizer. The obtained pellets were molded by an injection molding machine (FN2000 manufactured by Nissei Plastic Industrial Co. , Ltd.) to produce specimens for a flammability test and specimens for mechanical property measurements. Measurements were conducted according to the testing methods described above. The obtained results are shown in Table 2 together with the components and the mixing ratios of the resin compositions.

It is noted that the symbol "Izod" in the table indicates an Izod impact strength. In addition, "1/8 inch" and "1/16 inch" mean that the thickness of the specimen was 1/8 inch and 1/16 inch, respectively.

**(Table 1)**

| | | | | Conditions after extrusion | | |
|---|---|---|---|---|---|---|
| | Metal salt | PTFE | Acid | Smoke | Coloration | Strength |
| Example 1 | Dipotassium terephthalate 0.02 | 6-J 0.2 | - | Good | No | Good |
| Example 2 | Dipotassium terephthalate 0.02 | 6-J 0.4 | - | Good | No | Good |
| Example 3 | Dipotassium terephthalate 0.02 | 6C-J 0.4 | - | Good | No | Good |
| Example 4 | Disodium terephthalate 0.02 | 6-J 0.4 | - | Good | No | Good |
| Example 5 | Calcium terephthalate 0.02 | 6-J 0.4 | - | Good | No | Good |
| Example 6 | Disodium isophthalate 0.02 | 6-J 0.2 | - | Good | No | Good |
| Example 7 | Calcium isophthalate 0.02 | 6C-J 0.4 | - | Good | No | Good |
| Example 8 | Magnesium isophthalate 0.02 | 6-J 0.4 | - | Good | No | Good |
| Example 9 | Magnesium phthalate 0.02 | 6C-J 0.4 | - | Good | No | Good |
| Example 10 | Calcium phthalate 0.02 | 6-J 0.4 | - | Good | No | Good |
| Example 11 | Trisodium trimellitate 0.02 | 6-J 0.2 | - | Good | No | Good |
| Example 12 | Tetrasodium pyromellitate 0.02 | 6-J 0.2 | - | Good | No | Good |
| Example 13 | Tetrapotassium pyromellitate 0.02 | 6-J 0.2 | - | Good | No | Good |
| Comparative Example 1 | - | - | - | Good | No | Good |
| Comparative Example 2 | Comparative - | 6-J 0.2 | - | Good | No | Good |
| Comparative Example 3 | - | 6-J 0.4 | - | Good | No | Good |
| Comparative Example 4 | Potassium stearate 0.004 | 6-J 0.4 | - | Good | No | Fragile |
| Comparative Example 5 | Zinc acetate 0.001 | 6-J 0.2 | - | Good | No | A little fragile |
| Comparative Example 6 | Zinc acetate 0.001 | 6-J 0.2 | Trimellitic anhydride 0.3 | Smoke | Colored | Good |
| Comparative Example 7 | Zinc acetate 0.02 | 6-J 0.2 | - | Good | Colored | Fragile |
| Comparative Example 8 | Zinc acetate 0.02 | 6-J 0.2 | Trimellitic anhydride 0.3 | Smoke | Colored | Fragile |
| Comparative Example 9 | Zinc benzoate 0.001 | 6-J 0.2 | - | Good | No | A little fragile |
| Comparative Example 10 | Zinc benzoate 0.001 | 6-J 0.2 | Trimellitic anhydride 0.3 | Smoke | Colored | Good |
| Comparative Example 11 | Zinc benzoate 0.02 | 6-J 0.2 | - | Good | Colored | Fragile |
| Comparative Example 12 | Zinc benzoate 0.02 | 6-J 0.2 | Trimellitic anhydride 0.3 | Smoke | Colored | Fragile |

In Example 1 to 13 and Comparative Example 2 and 3, the conditions after extrusion were good. There was neither smoke nor coloration, and resin compositions having strength similar to that of Comparative Example 1 (a polycarbonate resin composition free from a flame retardant) were obtained. Comparative Examples 6 to 8 and 10 to 12 had a drawback in that the resin compositions got colored yellowish or brown. Comparative Examples 6, 8, 10 and 12 had a drawback in that a smoke occurred during extrusion. In Comparative Examples 5 and 9, when the resulting resin compositions were touched with hands, they had a feel which was a little fragile and in Comparative Examples 4, 7, 8, 11 and 12 the compositions had a feel which was fragile. Thus, these compositions were poor in strength in comparison to Comparative Example 1 (a polycarbonate resin compositionfreefrom aflame retardant).

The extruded resin compositions were processed into the form of pellets by a pelletizer. The obtained pellets were molded by an injection molding machine (FN2000 manufactured by Nissei Plastic Industrial Co., Ltd.) to produce specimens for a flammability test and specimens for mechanical property measurements. Measurements were conducted according to the testing methods described above. The obtained results are shown in Table 2 together with the components and the mixing ratios of the resin compositions.

It is noted that the symbol "Izod" in the table indicates an Izod impact strength. In addition, "1/8 inch" and "1/16 inch" mean that the thickness of the specimen was 1/8 inch and 1/16 inch, respectively.

**(Table 2)**

| | Metal salt | PTFE | Acid | Flame Retardancy UL-94 1/16 inch | Flame Retardancy UL-94 1/8 inch | Oxygen index | Impact resistance Izod 1/8inch | Molded article coloration |
|---|---|---|---|---|---|---|---|---|
| Example 1 | Dipotassium terephthalate 0.02 | 6-J 0.2 | - | V-0 | V-0 | 37.7 | 81.3 | No |
| Example 2 | Dipotassium terephthalate 0.02 | 6-J 0.4 | - | V-0 | V-0 | 37.7 | 78.5 | No |
| Example 3 | Dipotassium terephthalate 0.02 | 6C-J 0.4 | - | V-0 | V-0 | 38.2 | 79.5 | No |
| Example 4 | Disodium terephthalate 0.02 | 6-J 0.4 | - | V-0 | V-0 | 37.7 | 81.3 | No |
| Example 5 | Calcium terephthalate 0.02 | 6-J 0.4 | - | V-0 | V-0 | 32.9 | 82.5 | No |
| Example 6 | Disodium isophthalate 0.02 | 6-J 0.2 | - | V-0 | V-0 | 37.7 | 73.8 | No |
| Example 7 | Magnesium isophthalate 0.02 | 6C-J 0.4 | - | V-0 | V-0 | 33.3 | 85.7 | No |
| Example 8 | Calcium isophthalate 0.02 | 6-J 0.4 | - | V-0 | V-0 | 32.9 | 84.0 | No |
| Example 9 | Magnesium phthalate 0.02 | 6C-J 0.4 | - | V-0 | V-0 | 35.1 | 78.2 | No |
| Example 10 | Calcium phthalate 0.02 | 6-J 0.4 | - | V-0 | V-0 | 32.9 | 85.3 | No |
| Example 11 | Trisodium trimellitate 0.02 | 6-J 0.2 | - | V-0 | V-0 | 38.6 ' | 81.0 | No |
| Example 12 | Tetrasodium pyromellitate 0.02 | 6-J 0.2 | - | V-0 | V-0 | 38.6 | 81.8 | No |
| Example 13 | Tetrapotassium pyromellitate 0.02 | 6-J 0.2 | - | V-0 | V-0 | 38.2 | 81.9 | No |
| Comparative Example 1 | - | - | - | V-2 | V-2 | 25.4 | 77.4 | No |
| Comparative Example 2 | - | 6-J 0.2 | - | HB | V-1 | 28.9 | 84.3 | No |
| Comparative Example 3 | - | 6-J 0.4 | - | V-1 | V-0 | 33.8 | 83.2 | No |
| Comparative Example 4 | Potassium stearate 0.004 | 6-J 0.4 | - | V-0 | V-0 | 33.3 | 8.3 | Slightly yellowish |
| Comparative Example 5 | Zinc acetate 0.001 | 6-J 0.2 | - | V-2 | V-2 | 31.1 | 68.6 | Slightly yellowish |
| Comparative Example 6 | Zinc acetate 0.001 | 6-J 0.2 | Trimellitic anhydride 0.3 | V-1 | V-0 | 32.5 | 73.9 | Pale yellow |
| Comparative Example 7 | Zinc acetate 0.02 | 6-J 0.2 | 6-J 0.2 - | V-2 | V-2 | 28.9 | 11.5 | Pale brown |
| Comparative Example 8 | Zinc acetate 0.02 | 6-J 0.2 | Trimellitic anhydride 0.3 | V-2 | V-2 | 31.6 | 11.7 | Pale yellow |
| Comparative Example 9 | Zinc benzoate 0.001 | 6-J0.2 | - | V-1 | V-0 | 32.0 | 78.1 | Pale yellow |
| Comparative Example 10 | Zinc benzoate 0.001 | 6-J 0.2 | Trimellitic anhydride 0.3 | V-1 | V-0 | 32.5 | 81.5 | Slightly yellowish |
| Comparative Example 11 | Zinc benzoate 0.02 | 6-J 0.2 | - | V-2 | V-0 | 32.9 | 13.9 | Pale brown |
| Comparative Example 12 | Zinc benzoate 0.02 | 6-J 0.2 | Trimellitic anhydride 0.3 | V-2 | V-0 | 35.1 | 11.9 | Pale brown |

It is understood that the resin compositions of Examples 1 to 13 exhibit satisfactory flame retardancy due to the addition of an extremely small amount of the metal salt of the carboxylic acid. In particular, it is understood that Examples 1 to 4, 6 and 11 to 13, where the alkaline metal salts of the aromatic carboxylic acids were added, had excellent flame retardancy as well as exhibited extremely large oxygen indices.

On the other hand, Comparative Examples 1 to 12 are inferior in some points in comparison with the Examples. Specifically, in Comparative Example 1, the flame retardancy is inferior to that of the Examples since neither a metal salt nor a fluorine-containing resin was added in Comparative Example 1. In Comparative Examples 2 and 3, the flame retardancy is also inferior to that of the Examples since a metal salt was not added in Comparative Examples 2 and 3. It is understood that in Comparative Example 4, the Izod impact strength is extremely low in comparison with the Examples since a metal salt of an aliphatic carboxylic acid was used as a flame retardant in Comparative Example 4. In Comparative Examples 5 to 8, the flame retardancy is inferior to that of the Examples since the zinc salt of the aliphatic carboxylic acid was used as a flame retardant in Comparative Examples 5 to 8. In addition, it is understood that the Izod impact strength was similar to or lower than that of the Examples, and that it was extremely low in Comparative Examples 7 and 8. In Comparative Examples 9 to 12, the flame retardancy is inferior to that of the Examples since a zinc salt of an aromatic carboxylic acid was used as a flame retardant in Comparative Examples 9 to 12. In addition, it is understood that the Izod impact strength was similar to or lower than that of the Examples, and that it was extremely low in Comparative Examples 11 and 12. Furthermore, in Comparative Examples 6, 8, 10 and 12, a large amount of gas was generated from the resin compositions extruded during kneading. The molded articles of Comparative Examples 4 to 12 were colored slightly yellowish, pale yellow or pale brown and, therefore, had outside appearances unsuitable for applications where a high-quality appearance is required.

### (Example 14 and Comparative Examples 13 to 17)

The following experiments were conducted using, as a resin, a blend of resins (polymer alloy) of a polycarbonate resin and an ABS resin. Specifically, with respect to total 100 parts by weight of 95 parts by weight of a polycarbonate resin and 5 parts by weight of an ABS resin, various additives were mixed in the mixing ratios (parts by weight) shown in Table 3. The mixtures were melt-kneaded at 280°C and extruded using a vent type twin screw extruder (TEM-37BS manufactured by Toshiba Machine Co., Ltd.).

The extruded resin compositions were processed into a form of pellets by a pelletizer. The obtained pellets were molded by an injection molding machine (FN2000 manufactured by Nissei Plastic Industrial Co., Ltd.) to produce specimens for a flammability test and specimens for mechanical property measurements. Measurements were conducted according to the testing methods described above. The results are shown in Table 3 together with the components and the mixing ratios of the resin compositions.

From the results of Example 14 and Comparative Examples 13 to 17, it was confirmed that the composition of the present invention imparts satisfactory flame retardant performance even to a blend of resins (polymer alloy) of a polycarbonate resin and an ABS resin although it has been difficult to impart flame retardancy by using a metal salt as a flame retardant.

**(Table 3)**

| | Example | Comparative Example | | | | |
|---|---|---|---|---|---|---|
| | 14 | 13 | 14 | 15 | 16 | 17 |
| PC | 95 | 95 | 95 | 95 | 95 | 95 |
| ABS | 5 | 5 | 5 | 5 | 5 | 5 |
| Dipotassium terephthalate | 0.02 | | | | | |
| Potassium stearate | | | | 0.02 | | |
| Zinc acetate | | | | | 0.02 | |
| Zinc benzoate | | | | | | 0.02 |
| PTFE 6-J | 0.2 | | 0.2 | 0.2 | 0.2 | 0.2 |
| Flame Retardancy UL-94 (1/16 inch) | V-0 | V-2 | V-1 | V-1 | V-1 | V-1 |
| Flame Retardancy UL-94 (1/8 inch) | V-0 | HB | V-0 | V-0 | V-1 | V-0 |
| Oxygen Index | 30.7 | 28.9 | 31.1 | 33.3 | 26.8 | 26.8 |
| Impact resistance Izod (1/8 inch) | 65.2 | 75.2 | 68.7 | 15.4 | 11.4 | 9.2 |

### (Example 15 and Comparative Examples 18-21)

The following experiments were conducted using, as a resin, a blend of resins (polymer alloy) of a polycarbonate resin and a PS resin. Specifically, with respect to total 100 parts by weight of 95 parts by weight of a polycarbonate resin and 5 parts by weight of a PS resin, various additives were mixed in the mixing ratios (parts by weight) shown in Table 4. The mixtures were melt-kneaded at 280°C and extruded using a vent type twin screw extruder (TEM-37BS manufactured by Toshiba Machine Co., Ltd.).

The extruded resin compositions were processed into a form of pellets by a pelletizer. The obtained pellets were molded by using an injection molding machine (FN2000 manufactured by Nissei Plastic Industrial Co., Ltd.) to produce specimens for a flammability test and specimens for mechanical property measurements. Measurements were conducted according to the testing methods described above. The obtained results are shown in Table 4 together with the components and the mixing ratios of the resin compositions.

From the results of Example 15 and Comparative Examples 18 to 21, it was confirmed that the composition of the present invention imparts a satisfactory flame retardant performance, even to a blend of resins (polymer alloy) of a polycarbonate resin and a PS resin, although it has been difficult to impart flame retardancy by using a metal salt as a flame retardant.

**(Table 4)**

| | Example | Comparative Example | | | |
|---|---|---|---|---|---|
| | 15 | 18 | 19 | 20 | 21 |
| PC | 95 | 95 | 95 | 95 | 95 |
| PS | 5 | 5 | 5 | 5 | 5 |
| Dipotassium terephthalate | 0.02 | | | | |
| Zinc acetate | | | | 0.02 | |
| Zinc benzoate | | | | | 0.02 |
| PTFE 6-J | 0.2 | | 0.2 | 0.2 | 0.2 |
| Flame Retardancy UL-94 (1/16 inch) | V-1 | HB | Burn | V-2 | V-2 |
| Flame Retardancy UL-94 (1/8 inch) | V-0 | HB | V-1 | V-2 | V-1 |
| Oxygen Index | 32.0 | 25.0 | 30.3 | 24.6 | 28.1 |
| Impact Resistance Izod (1/8 inch) | 11.5 | 10.5 | 9.1 | 3.8 | 5.6 |

### (Example 16 and Comparative Examples 22-25)

The following experiments were conducted using, as a resin, a blend of resins (polymer alloy) of a polycarbonate resin and a polyester resin as a resin. Specifically, with respect to total 100 parts by weight of a combination of 95 parts by weight of a polycarbonate resin and 5 parts by weight of a PET resin, various additives were mixed in the mixing ratios (parts by weight) shown in Table 5. The mixtures were melt-kneaded at 280°C and extruded using a vent type twin screw extruder (TEM-37BS manufactured by Toshiba Machine Co., Ltd.).

The extruded resin compositions were processed into a form of pellets by a pelletizer. The obtained pellets were molded by using an injection molding machine (FN2000 manufactured by Nissei Plastic Industrial Co., Ltd.) to produce specimens for a flammability test and specimens for mechanical property measurements. Measurements were conducted according to the testing methods described above. The obtained results are shown in Table 5 together with the components and the mixing ratios of the resin compositions.

From the results of Example 16 and Comparative Examples 22 to 25, it was confirmed that the composition of the present invention imparts satisfactory flame retardant performance even to a blend of resins (polymer alloy) of a polycarbonate resin and a PET resin although it has been difficult to impart flame retardancy by using a metal salt as a flame retardant.

**(Table 5)**

| | Example | Comparative Example | | | |
|---|---|---|---|---|---|
| | 16 | 22 | 23 | 24 | 25 |
| PC | 95 | 95 | 95 | 95 | 95 |
| PET | 5 | 5 | 5 | 5 | 5 |
| Dipotassium terephthalate | 0.02 | | | | |
| Zinc acetate | | | | 0.02 | |
| Zinc benzoate | | | | | 0.02 |
| PTFE 6-J | 0.2 | | 0.2 | 0.2 | 0.2 . |
| Flame Retardancy UL-94 (1/8 inch) | V-0 | V-2 | V-2 | V-2 | V-2 |
| Oxygen Index | 27.6 | 25.9 | 27.2 | 27.2 | 27.6 |

### INDUSTRIAL APPLICABILITY

### (Effects of the Invention)

According to the present invention, a polycarbonate resin composition having satisfactory flame retardancy is obtained by using an extremely small amount of a metal salt of an aromatic carboxylic acid and fluorine-containing resin together. If a molding process is performed using such a resin composition, a molded article of a polycarbonate resin is obtained such that the molded article is superior in flame retardancy and also in various physical properties such as impact resistance and much coloration of the molded article does not generate during extrusion-kneading and molding. Therefore, the molded article can be used for applications where a high-quality outside appearance is required.

As described above, the present invention has been illustrated using the preferred embodiments of the present invention. However, the present invention should not be construed to be limited to the embodiments. It is understood that the scope of the present invention should be construed solely on the basis of the claims. It is understood that those skilled in the art can carry out an invention within a scope, which is equivalent to the description of the specification, based on the description of the specific preferred embodiments, the description of the present invention and the common technical knowledge. It is understood that the patents, patent applications, and other documents cited in the present specification should be incorporated by reference in the present specification as if the contents thereof are specifically described herein.

## Claims

1. A flame-retardant resin composition comprising:
(A) a polycarbonate resin;
(B) an alkali metal salt or alkaline earth metal salt of an aromatic carboxylic acid, selected from the group consisting of dipotassium terephthalate, disodium terephthalate, disodium isophthalate, trisodium trimellitate, tetrapotassium pyromellitate, tetrasodium pyromellitate, calcium terephthalate, magnesium isophthalate, calcium isophthalate, magnesium phthalate and calcium phthalate; and
(C) a fluorine-containing resin, wherein the composition is free of a chlorine-containing flame-retardant, and the composition is free of a bromine-containing flame-retardant.

2. A composition according to claim 1, wherein the salt (B) is selected from the group consisting of dipotassium terephthalate, disodium terephthalate, disodium isophthalate, trisodium trimellitate, tetrapotassium pyromellitate and tetrasodium pyromellitate.

3. A composition according to claim 1, wherein the salt (B) is selected from the group consisting of calcium terephthalate, magnesium isophthalate, calcium isophthalate, magnesium phthalate and calcium phthalate.

4. A composition according to claim 1, wherein the fluorine-containing resin (C) is a polytetrafluoroethylene.

5. A composition according to claim 1, comprising:
(B) 0.001 to 1 part by weight of an alkali metal salt of an aromatic carboxylic acid; and
(C) 0.05 to 2 parts by weight of the fluorine-containing resin,
with respect to 100 parts by weight of the polycarbonate resin (A).

6. A composition according to claim 1, comprising:
(B) 0.001 to 1 part by weight of an alkaline earth metal salt of an aromatic carboxylic acid; and
(C) 0.05 to 2 parts by weight of the fluorine-containing resin,
with respect to 100 parts by weight of the polycarbonate resin (A)

7. A composition according to claim 1, wherein the composition is free of a phosphorus-containing flame-retardant, metal salt of an aliphatic carboxylic acid and zinc salt of an aromatic carboxylic acid.

8. A composition according to claim 1, further comprising (D) a thermoplastic resin other than the polycarbonate resin and the fluorine-containing resin.

9. A composition according to claim 1, further comprising (D') at least one thermoplastic resin selected from an ABS resin, polyester resin and polystyrene resin.

10. A flame-retardant for polycarbonate resin which is used for preparing the composition of claim 1, comprising:
(B) an alkali metal salt or alkaline earth metal salt of an aromatic carboxylic acid, selected from the group consisting of dipotassium terephthalate, disodium terephthalate, disodium isophthalate, trisodium trimellitate, tetrapotassium pyromellitate, tetrasodium pyromellitate, calcium terephthalate, magnesium isophthalate, calcium isophthalate, magnesium phthalate and calcium phthalate; and
(C) a fluorine-containing resin.

11. A moulded article obtained by moulding a flame-retardant resin composition according to claim 1.

## Patentansprüche

1. Flammhemmende Harzzusammensetzung, umfassend:
(A) ein Polycarbonat-i-larz;
(B) ein Alkalimetallsalz oder ein Alkalierdmetallsalz einer aromatischen Carbonsäure, ausgewählt aus der Gruppe bestehend aus Dikaliumterephthalat, Dinatriumterephthalat, Dinatriumisophthalat, Trinatriumtrimellitat, Tetrakaliumpyromellitat, Tetranatriumpyromellitat, Calciumterephthalat, Magnesiumisophthalat, Calciumisophthalat, Magnesiumphthalat und Calciumphthalat; und
(C) ein fluorhaltiges Harz, wobei die Zusammensetzung frei ist von einem chlorhaltigen Flammschutzmittel und die Zusammensetzung frei ist von einem bromhaltigen Flammschutzmittel.

2. Zusammensetzung nach Anspruch 1, wobei das Salz (B) ausgewählt ist aus der Gruppe bestehend aus Dikaliumterephthalat, Dinatriumterephthalat, Dinatriumisophthalat, Trinatriumtrimellitat, Tetrakaliumpyromellitat und Tetranatriumpyromellitat.

3. Zusammensetzung nach Anspruch 1, wobei das Salz (B) ausgewählt ist aus der Gruppe bestehend aus Calciumterephthalat, Magnesiumisophthalat, Calciumisophthalat, Magnesiumphthalat und Calciumphthalat.

4. Zusammensetzung nach Anspruch 1, wobei das fluorhaltige Harz (C) ein Polytetrafluorethylen ist.

5. Zusammensetzung nach Anspruch 1, umfassend:
(B) 0,001 bis 1 Gewichtsteil eines Alkalimetallsalzes einer aromatischen Carbonsäure; und
(C) 0,05 bis 2 Gewichtsteile des fluorhaltigen Harzes,
bezogen auf 100 Gewichtsteile des PolycarbonatPl.arzes (A).

6. Zusammensetzung nach Anspruch 1, umfassend:
(B) 0,001 bis 1 Gewichtsteile eines Erdalkalimetallsalzes einer aromatischen Carbonsäure; und
(C) 0,05 bis 2 Gewichtsteile des fluorhaltigen Harzes,
bezogen auf 100 Gewichtsteile des Polycarbonatharzes (A).

7. Zusammensetzung nach Anspruch 1, wobei die Zusammensetzung frei ist von einem phosphorhaltigen Flammschutzmittel, Metallsalz einer aliphatischen Carbonsäure und Zinksalz einer aromatischen Carbonsäure.

8. Zusammensetzung nach Anspruch 1, weiterhin umfassend (D) ein thermoplastisches Harz, das ein anderes als das Polycarbonatharz und das fluorhaltige Harz ist.

9. Zusammensetzung nach Anspruch 1, weiterhin umfassend (D') mindestens ein thermoplastisches Harz, ausgewählt aus ABS-Harz, Polyesterharz und Polystyrolharz.

10. Flammschutzmittel für Polycarbonatharz, das zur Herstellung der Zusammensetzung von Anspruch 1 verwendet wird, umfassend:
(B) ein Alkalimetallsalz oder ein Erdalkalimetallsalz einer aromatischen Carbonsäure, ausgewählt aus der Gruppe bestehend aus Dikaliumterephthalat, Dinatriumterephthalat, Dinatriumisophthalat, Trinatriumtrimellitat, Tetrakaliumpyromellitat, Tetranatriumpyromellitat, Calciumterephthalat, Magnesiumisophthalat, Calciumisophthalat, Magnesiumphthalat und Calciumphthalat; und
(C) ein fluorhaltiges Harz.

11. Formteil, erhalten durch Formen einer flammhemmenden Harzzusammensetzung nach Anspruch 1.

## Revendications

1. Composition de résine ignifugeante comprenant :
(A) une résine de polycarbonate ;
(B) un sel de métal alcalin ou un sel de métal alcalino-terreux et d'un acide carboxylique aromatique, choisi dans l'ensemble constitué par le téréphtalate dipotassique, le téréphtalate disodique, l'isophtalate disodique, le trimellitate trisodique, le pyromellitate tétrapotassique, le pyromellitate tétrasodique, le téréphtalate de calcium, l'isophtalate de magnésium, l'isophtalate de calcium, le phtalate de magnésium et le phtalate de calcium ; et
(C) une résine fluorée,
laquelle composition est exempte d'ignifugeant chloré, et laquelle composition est exempte d'ignifugeant bromé.

2. Composition selon la revendication 1, dans laquelle le sel (B) est choisi dans l'ensemble constitué par le téréphtalate dipotassique, le téréphtalate disodique, l'isophtalate disodique, le trimellitate trisodique, le pyromellitate tétrapotassique et le pyromellitate tétrasodique.

3. Composition selon la revendication 1, dans laquelle le sel (B) est choisi dans l'ensemble constitué par le téréphtalate de calcium, l'isophtalate de magnésium, l'isophtalate de calcium, le phtalate de magnésium et le phtalate de calcium.

4. Composition selon la revendication 1, dans laquelle la résine fluorée (C) est un polytétrafluoroéthylène.

5. Composition selon la revendication 1, comprenant :
(B) 0,001 à 1 partie en poids d'un sel de métal alcalin et d'un acide carboxylique aromatique ; et
(C) 0,05 à 2 parties en poids de la résine fluorée,
pour 100 parties en poids de la résine de polycarbonate (A).

6. Composition selon la revendication 1, comprenant :
(B) 0,001 à 1 partie en poids d'un sel de métal alcalino-terreux et d'un acide carboxylique aromatique ; et
(C) 0,05 à 2 parties en poids de la résine fluorée,
pour 100 parties en poids de la résine de polycarbonate (A).

7. Composition selon la revendication 1, laquelle composition est exempte d'ignifugeant phosphoré, de sel métallique d'un acide carboxylique aliphatique, et de sel de zinc d'un acide carboxylique aromatique.

8. Composition selon la revendication 1, comprenant en outre (D) une résine thermoplastique autre que la résine de polycarbonate et la résine fluorée.

9. Composition selon la revendication 1, comprenant en outre (D') au moins une résine thermoplastique choisie parmi une résine ABS, une résine de polyester et une résine de polystyrène.

10. Ignifugeant pour résine de polycarbonate qui est utilisé pour préparer la composition selon la revendication 1, comprenant :
(B) un sel de métal alcalin ou un sel de métal alcalino-terreux et d'un acide carboxylique aromatique, choisi dans l'ensemble constitué par le téréphtalate dipotassique, le téréphtalate disodique, l'isophtalate disodique, le trimellitate trisodique, le pyromellitate tétrapotassique, le pyromellitate tétrasodique, le téréphtalate de calcium, l'isophtalate de magnésium, l'isophtalate de calcium, le phtalate de magnésium et le phtalate de calcium ; et
(C) une résine fluorée.

11. Article moulé obtenu par moulage d'une composition de résine ignifugeante selon la revendication 1.
